# EUROPÄISCHE PATENTSCHRIFT

(11) **EP 0 917 514 B1**
(45) Veröffentlichungstag und Bekanntmachung des Hinweises auf die Patenterteilung: **02.05.2001**
(21) Anmeldenummer: 98914803.6
(22) Anmeldetag: 21.02.1998
(51) Int. Cl.: B60T 8/36

(54) **ELASTISCHE LAGERUNG EINES HYDRAULISCHEN AGGREGATES EINER FAHRZEUGBREMSANLAGE**
ELASTIC SUSPENSION FOR A HYDRAULIC UNIT IN A MOTOR VEHICLE BRAKING SYSTEM
SUSPENSION ELASTIQUE D'UN ORGANE HYDRAULIQUE D'UN SYSTEME DE FREINAGE DE VEHICULE AUTOMOBILE

(30) Priorität: 09.06.1997 DE 19724177
(43) Veröffentlichungstag der Anmeldung: 26.05.1999
(73) Patentinhaber: ROBERT BOSCH GMBH, 70442 Stuttgart (DE)
(72) Erfinder: OTT, Harald, D-71229 Leonberg (DE)
(86) Internationale Anmeldenummer: DE9800530
(87) Internationale Veröffentlichungsnummer: WO9856629

(56) Entgegenhaltungen:
- EP-A- 0 699 571
- EP-B- 0 456 991
- DE-A- 3 810 788
- PATENT ABSTRACTS OF JAPAN vol. 095, no. 005, 30.Juni 1995 -& JP 07 033005 A (TOYOTA MOTOR CORP), 3.Februar 1995,

## Beschreibung

### Stand der Technik

Die Erfindung geht aus von einer elastischen Lagerung eines hydraulischen Aggregates einer Fahrzeugbremsanlage in einem Fabrzeug gemäß der Gattung des Hauptanspruchs.

Durch die die Gattung bildende Druckschrift EP 0 456 991 B1 ist eine elastische Lagerung eines hydraulischen Aggregates bekannt, das beispielsweise einer Radbremsschlupfbegrenzung, einer Antriebsschlupfbegrenzung durch Bremsung antreibbarer Räder oder einer anderen Art des automatischen Bremsens wie Bremsung zur Erzeugung von Giermomenten zwecks Verbesserung des Fahrverhaltens eines Fahrzeuges dient. Die elastische Lagerung besteht aus drei gummielastischen Elementen in Form von hohlzylindrischen Bauteilen, drei von dem Aggregat ausgehenden und sich in die gummielastischen Elemente erstreckenden Zapfen, die in einer im wesentlichen waagerechten Ebene liegend parallel ausgerichtet sind, sowie einer Konsole mit zwei senkrecht aufragenden Stützschenkeln und, an diese angeformt, unteren Teilschalen, in die die gummielastischen Elemente wenigstens zur Hälfte einliegen, und oberen lagefixierten Teillagerschalen, die die gummielastischen Elemente überdecken. Zur Fixierung der oberen Teillagerschalen relativ zu den unteren Teillagerschalen sind die oberen Teillagerschalen nach Art von Schiebestücken ausgebildet, die längs der Längsachse der unteren Teillagerschalen zu diesen ausgerichtet und über die gummielastischen Elemente geschoben werden. Zu diesem Zweck können an den oberen Teillagerlagerschalen achsparallel ausgerichtete U-Führungsprofile angeformt sein, die von den unteren Teillagerschalen abstehende Führungsschenkel umgreifen. Ein weiteres Ausführungsbeispiel besitzt in Umfangsrichtung der oberen Teillagerschalen zu einem Rohr geschlossene Fortsätze, so daß beim Aufschieben der im wesentlichen rohrförmigen Bauteile entlang der unteren Teillagerschalen und entlang der gummiartig elastischen Elemente sowohl diese gummiartig elastischen Elemente und die unteren Teillagerschalen ringartig umschlossen sind. Erkennbar ist das Aufschieben und Entlangschieben der oberen Teillagerschalen über die gummielastischen Elemente um so schwieriger, je strammer die gummielastischen Elemente von den Teillagerschalen zu umfassen sind.

Durch die Druckschrift EP 0 699 571 A1 ist eine weitere elastische Lagerung eines hydraulischen Aggregates einer Fahrzeugbremsanlage bekannt. Diese elastische Lagerung weist drei im wesentlichen hohlzylindrisch ausgebildete gummielastische Elemente auf, die in Sacklöcher des hydraulischen Aggregates eingesteckt sind, wobei zwei der Sacklöcher an einander gegenüberliegenden Seiten des hydraulischen Aggregates angeordnet sind und ein drittes im wesentlichen senkrecht ausgerichtetes Sackloch in eine Unterseite des hydraulischen Aggregates eingearbeitet sein kann.

### Vorteile der Erfindung

Die elastische Lagerung eines hydraulischen Aggregates einer Fahrzeugbremsanlage mit den kennzeichnenden Merkmalen des Anspruchs 1 hat den Vorteil, daß die oberen Teillagerschalen in bequemer Weise in im wesentlichen gleicher Montagerichtung wie das hydraulische Aggregat relativ zu den Stützschenkeln montierbar sind. Dadurch sind die oberen Teillagerschalen im wesentlichen radial zu den gummielastischen Elementen montierbar und andrückbar. Diese Montagerichtung vermeidet praktisch axiale Relativverschiebungen der oberen Teillagerschalen relativ zu den gummielastischen Elementen, so daß Verschiebekräfte, die der Überwindung von Reibungskräften dienen, vermieden sind.

Durch die in den Unteransprüchen aufgeführten Maßnahmen sind vorteilhafte Weiterbildungen und Verbesserungen der im Hauptanspruch angegebenen elastischen Lagerung möglich.

Die kennzeichnenden Merkmale des Anspruchs 2 ergeben den Vorteil einer mechanischen Ausrichtung der oberen Teillagerschalen relativ zu den unteren Teillagerschalen vor dem Andrücken der oberen Teillagerschalen an die gummielastischen Elemente.

Die kennzeichnenden Merkmale des Anspruchs 3 ergeben preisgünstig herstellbare Fixiermittel, die der Lagesicherung der oberen Teillagerschalen relativ zu den unteren Teillagerschalen dienen. Die kennzeichnenden Merkmale des Anspruchs 4 ergeben ein Ausführungsbeispiel für die oberen Teillagerschalen aus Metall, wobei solche metallischen oberen Lagerschalen in bekannter Stanz- und Biegetechnik herstellbar sind. Die kennzeichnenden Merkmale des Anspruchs 5 geben ein Beispiel an, in welcher Weise die Rastnasen den oberen Teillagerschalen zuordenbar sind. Die kennzeichnenden Merkmale des Anspruches 6 ergeben ein zweckmäßiges Ausführungsbeispiel, wie Rastnasen in Stanz- und Biegetechnik herstellbar sind. Die kennzeichnenden Merkmale des Anspruchs 7 ergeben ein weiteres Ausführungsbeispiel für die Zuordnung wenigstens einer Rastnase zu einer oberen Teillagerschale. Bei diesem Ausführungsbeispiel beginnt die Montage der oberen Teillagerschale mit einem Einhaken, so daß ein Monteur beim Andrücken der oberen Teillagerschale an ein gummiartiges Element lediglich nur noch das Einschnappen einer Rastnase in eine Rastöffnung zu überwachen hat.

Die kennzeichnenden Merkmale des Anspruches 8 übernehmen den durch das Umfassen von unteren Teillagerschalen sich ergebenden Vorteil bezüglich Festigkeit einer Fixierung mit dem Vorteil der erfindungsgemäß im wesentlichen radialen Montagerichtung der oberen Teillagerschalen. Beim Zuführen der oberen Teillagerschalen gegen die gummielastischen Elemente bzw. die unteren Teillagerschalen werden die oberen Teillagerschalen etwas winkelig ausgerichtet, so daß die Fixierbügel neben den unteren Teillagerschalen absenkbar und schließlich unter Zusammendrückung der gummielastischen Elemente unter die unteren Teillagerschalen schwenkbar sind. Die kennzeichnenden Merkmale des Anspruchs 9 geben ein Ausführungsbeispiel an zur Lagesicherung des Fixierbügels, daß dieser in der Fixierstellung verbleibt. Das Ausführungsbeispiel ist technisch preisgünstig als ein einstückiges thermoplastisches Bauteil herstellbar. Die kennzeichnenden Merkmale des Anspruches 10 geben ein weiteres Ausführungsbeispiel an, bei dem die Lagesicherung des Fixierbügels mittels einer Zunge und einer Rastnase erfolgt, die am jeweiligen Stützschenkel angeordnet sind.

Die kennzeichnenden Merkmale des Anspruches 12 machen Gebrauch von der Elastizität eines thermoplastischen Werkstoffes, aus dem die Fixierbügel herstellbar sind, wodurch der Fixierbügel und eine elastisch federnde Rastnase gleichzeitig und dadurch billig herstellbar sind.

Die kennzeichnenden Merkmale des Anspruchs 13 ergeben eine verliersichere Befestigung der beiden gummielastischen Elemente an den Seiten des hydraulischen Aggregates mit dem Vorteil, daß ein solches hydraulisches Aggregat mit den gummielastischen Elementen auf einer Montagestraße herstellbar ist und somit vorbereitet ist für den Einbau in ein Fahrzeug an einem weit entfernten Ort.

### Zeichnung

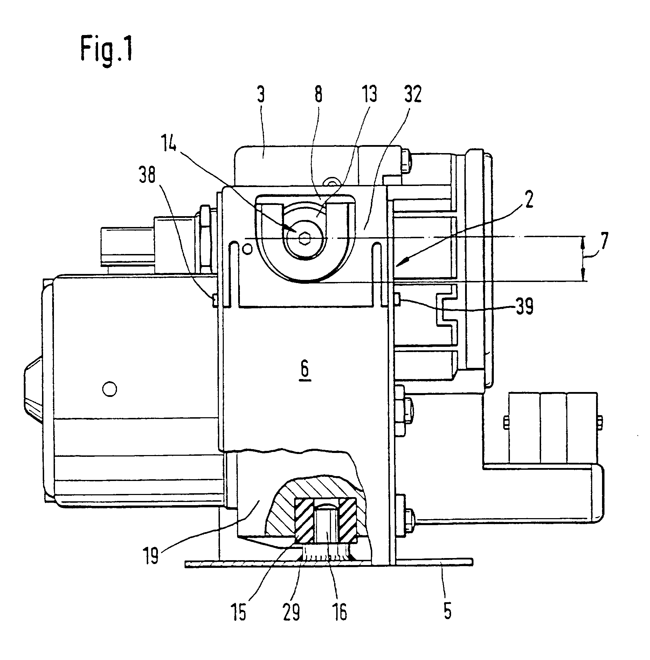

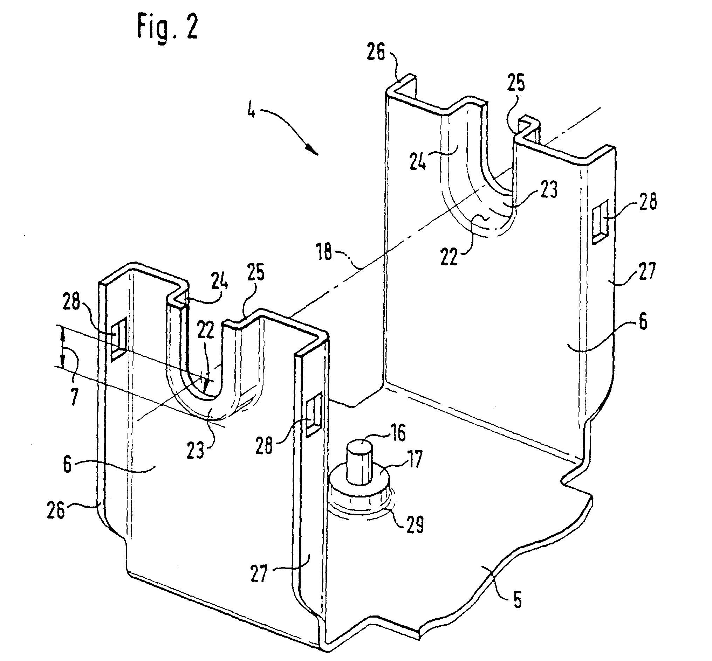

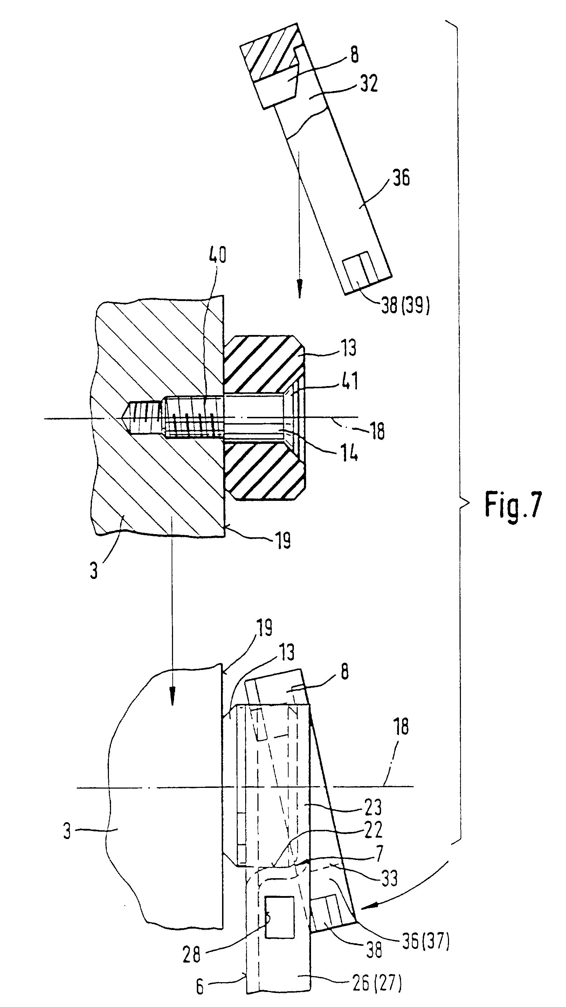

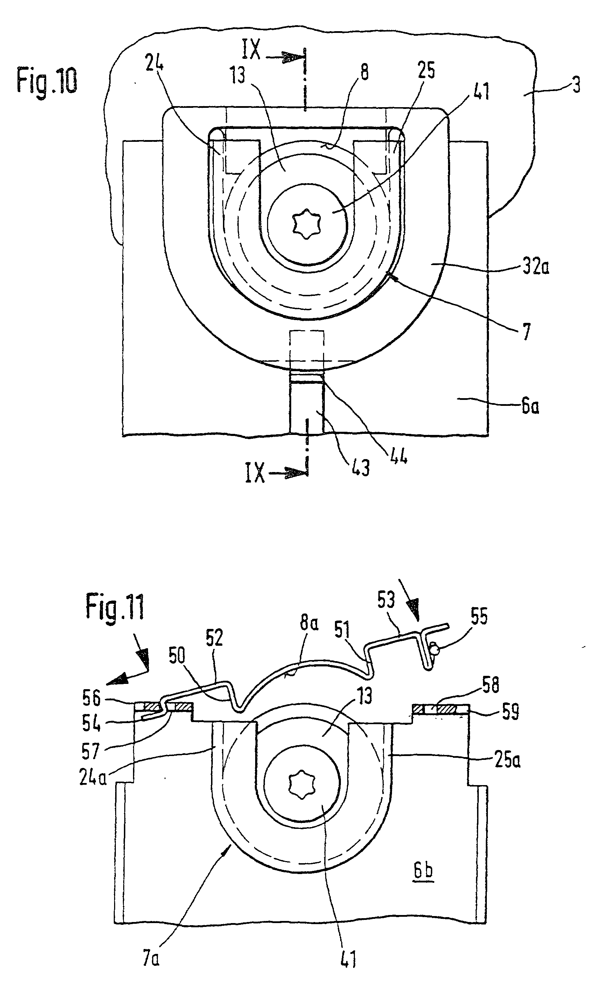

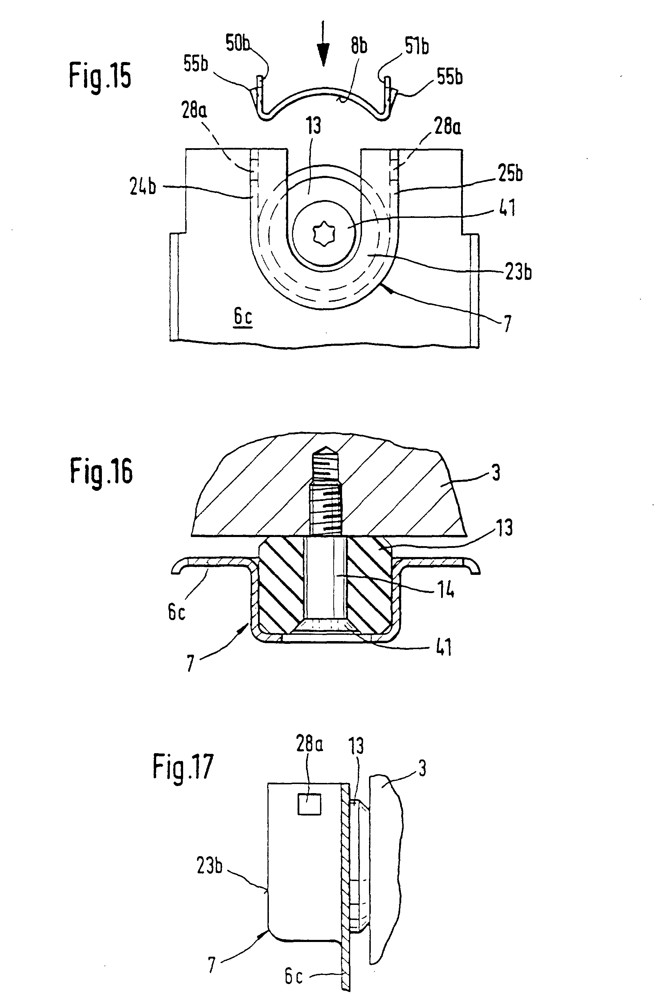

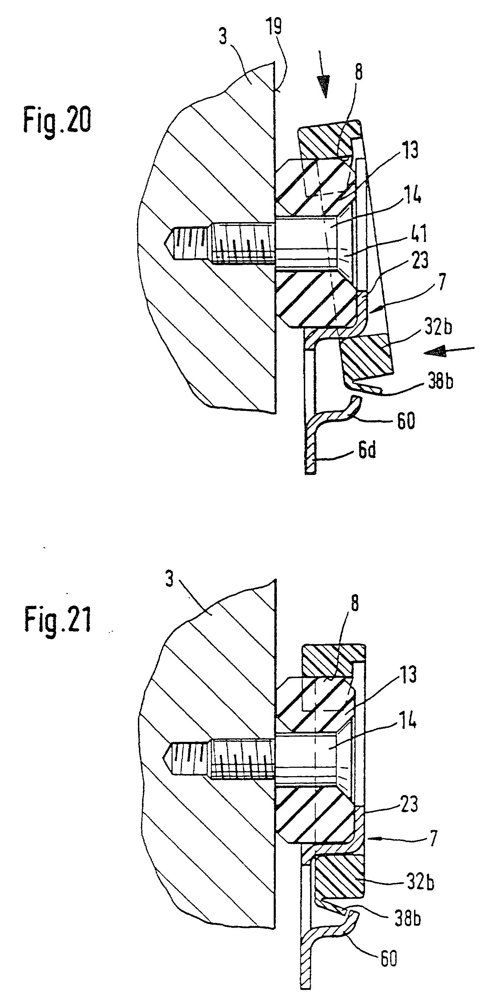

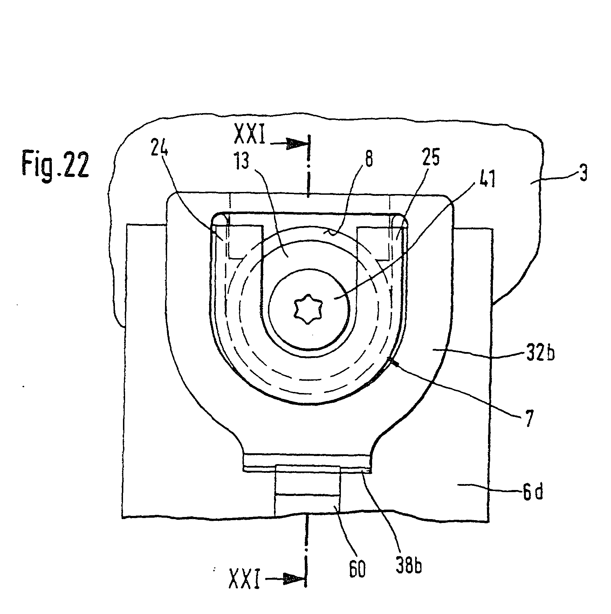

Mehrere Ausführungsbeispiele der Erfindung sind in der Zeichnung dargestellt und in der nachfolgenden Beschreibung näher erläutert. Es zeigen Figur 1 ein erstes erfindungsgemäßes Ausführungsbeispiel einer elastischen Lagerung eines hydraulischen Aggregates in der Seitenansicht, Figur 2 eine schrägbildliche Ansicht eines Bestandteiles der elastischen Lagerung gemäß der Figur 1, Figuren 3, 4, 5 und 6 ein weiteres Einzelteil der elastischen Lagerung in verschiedenen Ansichten, Figur 7 Montageschritte der Einzelteile für die elastische Lagerung gemäß der Figur 1, Figuren 8 bis 10 ein weiteres Ausführungsbeispiel in zwei unterschiedlichen Montagestadien und fertig montiert in der Seitenansicht, Figuren 11 bis 14 ein weiteres Ausführungsbeispiel zur Herstellung aus Federblech in verschiedenen Montagestadien, Figuren 15 bis 19 ein alternatives Ausführungsbeispiel, das ebenfalls wenigstens eine aus Federblech herstellbare Oberteillagerschale aufweist, und Figuren 20 bis 22 ein fünftes Ausführungsbeispiel in zwei Montagestadien.

### Beschreibung der Ausführungsbeispiele

Das erste Ausführungsbeispiel einer elastischen Lagerung 2 gemäß den Figuren 1 und 2 für ein hydraulisches Aggregat 3 umfaßt eine Konsole 4, die als ein Blechformteil mit Grundplatte 5 und von dieser im wesentlichen senkrecht nach oben abstehende Stützschenkel 6 aufweist, zwei an die Stützschenkel 6 angeformte untere Teillagerschalen 7, zwei obere Teillagerschalen 8, zwei den Teillagerschalen 7, 8 zugeordnete gummielastische Elemente 13, den gummielastischen Elementen 13 zugeordnete Zapfen 14, ein weiteres gummielastisches Element 15, einen weiteren Zapfen 16 und zwischen diesem Zapfen 16 und der Grundplatte 5 beispielsweise eine Stützsäule 17.

Das hydraulische Aggregat 3 ist beispielsweise ausgebildet gemäß der Druckschrift EP 0 699 571 A1 mit Ausnahme der Anordnung der beiden gummielastischen Elemente 9, die auf zwei einander gegenüberliegenden Seiten des hydraulischen Aggregates angeordnet sind und dabei in einer gemeinsamen Achse 18, die in der Figur 2 angedeutet ist, liegen, und wobei das hydraulische Aggregat 3 im Bereich der beiden Zapfen 14 den Stützschenkeln 6 zugekehrte ebene Flächen 19, wie in der Figur 7 angedeutet, aufweist. Wahlweise kann aber das hydraulische Aggregat 3 auch einen anderen inneren Aufbau haben, als dies in der Druckschrift EP 0 699 571 A1 beschrieben ist.

Wie am besten in der Figur 2 erkennbar ist, bestehen die unteren Teillagerschalen 7 aus um die Achse 18 gekrümmten halbzylindrischen Teilflächen 22, denen stirnseitig und dabei quer zur Achse 18 Bodenflansche 23 zugeordnet sind, die als axiale Anschläge für die gummielastischen Elemente 13 dienen. Oberhalb der unteren Teillagerschalen 7 erstrecken sich im wesentlichen vertikal und dabei parallel zueinander paarweise Verlängerungen 24, 25, entlang denen sich aufwärts die Bodenflansche 23 verlängert erstrecken. Die Stützschenkel 6 weisen parallel zu den Verlängerungen 24 und 25 verlaufend jeweils zwei Flansche 26 und 27 auf, die ebenfalls parallel zueinander ausgerichtet sind. Dabei stehen die Flansche 26 und 27 rechtwinkelig ab von den Stützschenkeln 6 und zeigen dabei weg von dem zwischen diese Stützschenkel 6 einzuhängenden hydraulischen Aggregat 3. In die Flansche 26 und 27 eingearbeitet sind jeweils Rastöffnungen 28, auf die später zurückgekommen wird. Der Zapfen 16 und die Stützsäule 17 sind vorzugsweise einstückig ausgebildet und können beispielsweise mittels einer Schweißnaht 29 an der Grundplatte 5 befestigt sein.

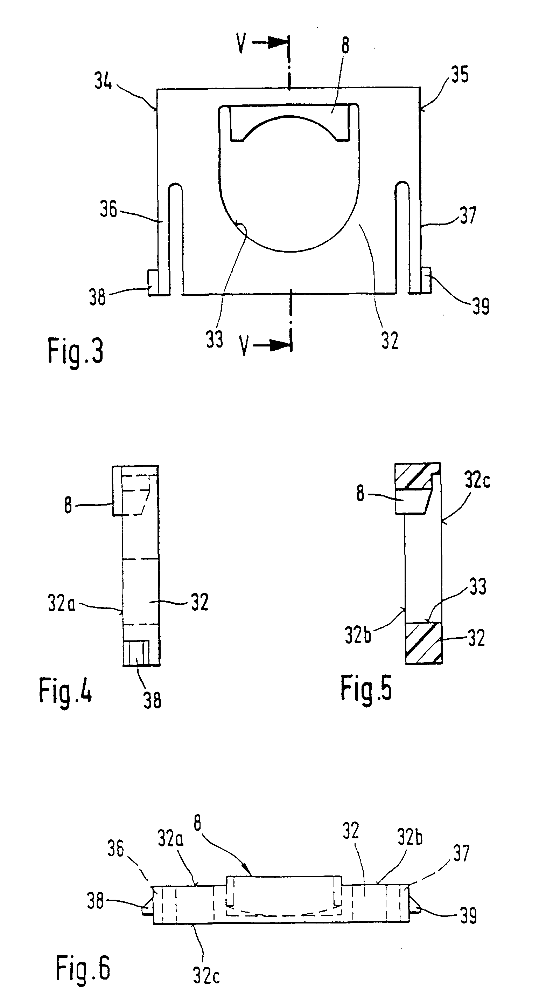

In der Figur 3 ist in Übereinstimmung mit der Ansicht gemäß der Figur 1 eine obere Teillagerschale 8 dargestellt, an die sich einstückig ein im wesentlichen U-förmiger Bügel 32 anschließt. Der im wesentlichen U-förmige Bügel 32 hat einen halbkreisartig gekrümmten Flächenabschnitt 33, der gemäß der Figur 1 bestimmt ist, sich um und unter die untere Teillagerschale 7 zu erstrecken und an der tiefsten Stelle an dieser Teillagerschale 7 anzuliegen. Beiderseits und dabei im Abstand zu der oberen Teillagerschale 8 weist der im wesentlichen U-förmige Bügel 32 zwei Begrenzungsflächen 34, 35 auf, die untereinander einen Abstand haben, der um ein Einfügespiel geringer ist als die lichten Abstände der paarweise einander zugeordneten Flansche 26 und 27. Entlang der Begrenzungsflächen 34 und 35 schließen sich federnde Zungen 36 und 37 an, die an ihren freien Enden jeweils Rastnasen 38, 39 aufweisen. Wie am besten in der Figur 6, die eine Draufsicht auf die obere Teillagerschale 8 und den Bügel 32 veranschaulicht, gezeigt ist, sind die Rastnasen derart geformt, daß, wieder bezogen auf die Figur 6, eine Bewegung der Zungen 36 und 37 in der Zeichenblattebene nach oben eine Bewegungsrichtung zum Einrasten der Rastnasen 38 und 39 in die Rastöffnungen 28 der Flansche 26 und 27 ist. In der Figur 6 betrachtet bildet die obere Teillagerschale 8 eine Stufe relativ zur Begrenzung 32a und 32b. Das Maß dieses Absatzes bzw. dieser Stufe entspricht dabei im wesentlichen der Dicke eines Bleches, aus dem die Stützschenkel 6 geformt sind. Andererseits ist, wie in der Figur 5 am besten erkennbar, relativ zu einer den Begrenzungsflächen 32a und 32b gegenüberliegenden Begrenzungsfläche 32c die obere Teillagerschale 8 zurückversetzt, wobei diese Zurückversetzung beispielsweise wiederum der Dicke des Bleches, aus dem die Stützschenkel geformt sind, entspricht. Somit entspricht das Maß der Zurückversetzung auch im wesentlichen der Dicke der Bodenflansche 23. In der Figur 7 ist unten ein Stützschenkel 6 dargestellt mit einer unteren Teillagerschale 7. Darüber ist ein Ausschnitt aus dem hydraulischen Aggregat 3 dargestellt, an dessen ebener Begrenzungsfläche 19 ein gummielastisches Element 13 fixiert ist mittels eines Zapfens 14, der mittels eines Gewindes 40 in das hydraulische Aggregat 3 eingeschraubt ist, wobei ein kegeliger Kopf 41 das gummielastische Element 13 gegen Verlieren sichert. In einem Abstand oberhalb des gummielastischen Elementes 13 ist die obere Teillagerschale 8 zusammen mit dem Bügel 32 in winkeliger Ausrichtung relativ zu der ebenen Fläche 19 des Aggregats 3 ausgerichtet dargestellt.

Bei der Montage wird nun wie folgt vorgegangen:

Das hydraulische Aggregat wird abgesenkt zwischen zwei Stützschenkel 6, wobei die beiden gummielastischen Elemente zwischen die Verlängerungen 24 und 25 geführt und in die unteren Teillagerschalen 7 eingelagert werden. Dabei wird auch das gummielastische Element 15 über den Zapfen 16 geschoben. Beispielsweise kann danach das gummielastische Element 15 auf der Stützsäule 17 aufliegen. Insoweit ist ein erster Montageschritt abgeschlossen. Als zwei weitere Montageschritte schließen sich an das Ausrichten der oberen Teillagerschalen 8 gemäß der Figur 7 in die winkeligen Positionen einschließlich dem Absenken auf das jeweilige gummielastische Element 13, wobei jede obere Teillagerschale 8 zwischen die Verlängerungen 24 und 25 entlang der nach oben verlängerten Bodenflansche 23 eintaucht. Wie in der Figur 7 ersichtlich ist, haben dabei die Rastnasen 38, 39 ihre Positionen außerhalb der Flansche 26 und 27. Durch Schwenken des Bügels 32 mit den federnden Zungen 36, 37 zwischen die Flansche 26 und 27 federn die Zungen 36 und 37 zueinander, die Rastnasen 38, 39 finden Platz zwischen den beiden Flanschen 26 und 27, so daß bei weiterer Schwenkbewegung diese Rastnasen 38, 39 in Ausrichtung zu den Rastöffnungen 28 gelangen und infolge der Elastizitäten der federnden Zungen 36 und 37 in diese Rastöffnungen einschnappen. Damit ist die Montage samt der Sicherung des hydraulischen Aggregates 3 beendet.

Erkennbar ist, daß das Einhängen des hydraulischen Aggregates 3 in die unteren Teillagerschalen 7 der elastischen Lagerung 2 in einfacher Weise durchführbar ist, entweder von Hand oder automatisiert. Erkennbar ist des weiteren auch, daß das Absenken der oberen Teillagerschale 8 auf ein jeweiliges gummielastisches Element 13, das Andrücken dieser oberen Teillagerschale 8 an oder in das gummielastische Element 13 und dann das Heranschwenken des im wesentlichen U-förmigen Bügels 32 an den jeweiligen Stützschenkel 6 in relativ einfacher Weise und dadurch billig durchführbar sind. Erkennbar ist, daß bei den beschriebenen Montagevorgängen keine Schraubverbindung herzustellen und zu sichern ist. Eine Sicherung erfolgt hier durch das erwähnte Einrasten der Rastnasen 38, 39 in die Rastöffnungen 28, das entweder optisch oder durch Tasten auf Erfolg prüfbar ist. Während des Heranschwenkens des jeweiligen im wesentlichen U-förmigen Bügels 32 gegen den jeweiligen Stützschenkel 6 ist aufgrund des Widerstandes, der beim Entlanggleiten des gekrümmten Flächenabschnittes 33 unter die untere Teillagerschale 7 fühlbar ist, erkennbar, daß das gummielastische Element 13 stramm genug von der unteren Teillagerschale 7 und der oberen Teillagerschale 8 umfaßt sein wird.

Wie aus dem Hinweis auf das Umfaßtsein hervorgeht, wird eine Elastizität der elastischen Lagerung quer zur Achse 18 und also radial zu den gummielastischen Elementen 13 durch deren Verformbarkeit relativ zu den unteren Teillagerschalen und den oberen Teillagerschalen bestimmt. Zusätzlich ist aber auch Elastizität längs der Achse 18 vorhanden durch axiales Anliegen der gummielastischen Elemente 13 an den am besten in der Figur 2 erkennbaren Bodenflanschen 23. Im Rahmen der vorliegenden Erfindung braucht auf die vorbekannte Anordnung des dritten gummielastischen Elementes 15 nicht eingegangen zu werden.

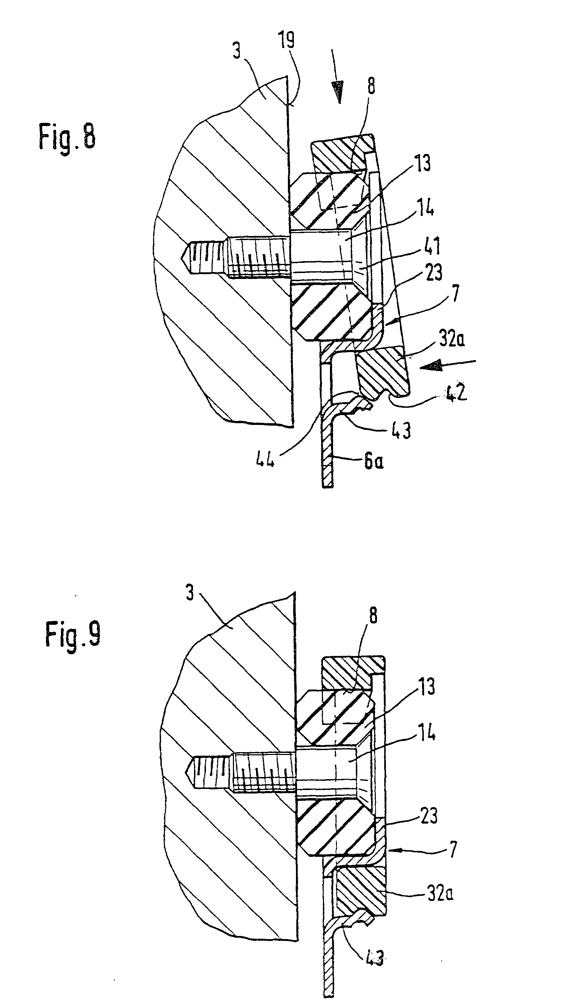

Ein zweites Ausführungsbeispiel der Erfindung gemäß den Figuren 8 bis 10 unterscheidet sich von dem zuerst beschriebenen Ausführungsbeispiel im wesentlichen nur dadurch, daß von einem sich an eine jeweilige obere Teillagerschale 8 anschließenden im wesentlichen U-förmigen Bügel 32a keine federnde Zungen, an deren Enden Rastnasen angeordnet sind, ausgehen. Anstelle der federnden Zungen und Rastnasen des ersten Ausführungsbeispieles weist als Ersatz für wenigstens eine Rastöffnung 28 der Bügel 32a an seiner tiefsten Stelle eine Rastkerbe 42 auf. In Anpassung daran ist ein jeweiliger Stützschenkel 6a mit einer federnden Zunge 43 und einer daran angeformten Rastnase 44 versehen. Dabei erstreckt sich die federnde Zunge 43 aus der Ebene des Stützschenkels 6a heraus und im wesentlichen parallel zur unteren Teillagerschale 7. Hierbei ist, was aber nicht zwingend notwendig ist, der Stützschenkel 6a aus einem metallischen Blech geformt, so daß durch Anbringen eines im wesentlichen U-förmigen Stanzschnittes die federnde Zunge 43 aus der Ebene des Stützschenkels 6a herausbiegbar ist. Vor dem Herausbiegen kann beispielsweise durch einen Prägevorgang die Rastnase 44 geformt werden.

Wiederum ist, so wie dies am besten die Figur 8 erkennen läßt, die obere Teillagerschale 8 mit winkelig zur Fläche 19 des hydraulischen Aggregates 3 ausgerichtetem im wesentlichen U-förmigen Bügel 32a auf das gummielastische Element 13 absenkbar und dabei zwischen senkrechte Verlängerungen 24 und 25, die wiederum vertikal von der unteren Teillagerschale nach oben ausgehen, einhängbar. Wiederum sorgen Bodenflansche 23 für axiale Fixierung des jeweiligen gummiartigen Elementes 13.

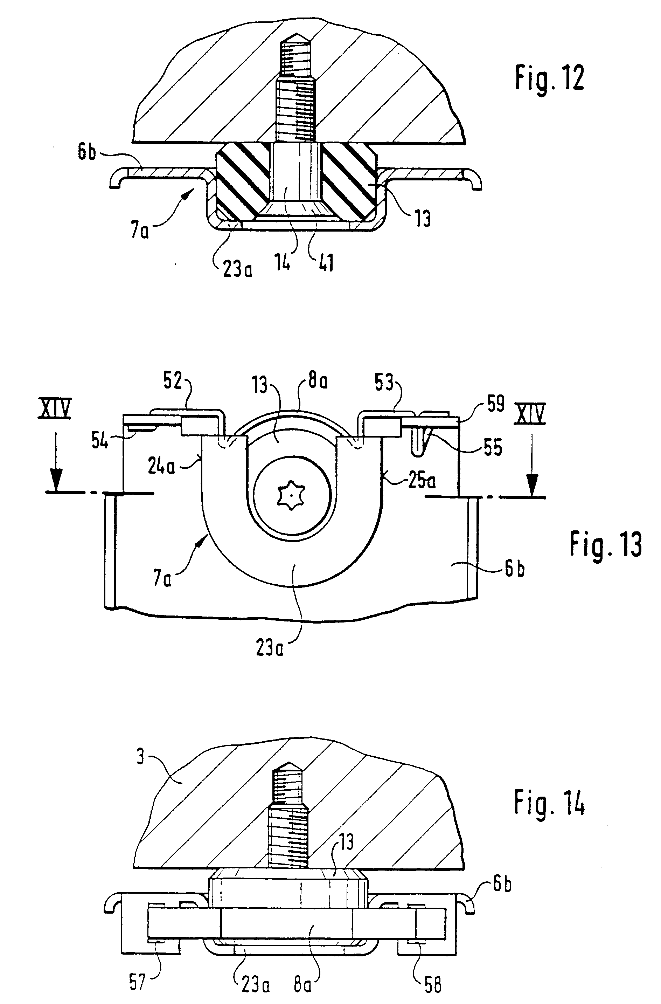

Das dritte Ausführungsbeispiel gemäß den Figuren 11 bis 14 weist obere Teillagerschalen 8a auf, die aus einem Streifen eines metallischen Federwerkstoffes biegbar sind. Wiederum sind solche oberen Teillagerschalen einsetzbar zwischen zwei Verlängerungen 24a und 25a, die von unteren Teillagerschalen 7a ausgehen, wobei die unteren Teillagerschalen 7a jeweils von einem Stützschenkel 6b ausgehen. Zum Eintauchen zwischen die beiden Verlängerungen 24a und 25a schließen sich an die jeweilige obere Teillagerschale 8a parallel gebogene Teilstücke 50, 51 an, von denen aus sich weitere Teilstücke 52 und 53 quer und dabei in einer gemeinsamen Ebene erstrecken können. Ein freies Ende des weiteren Teilstückes 52 ist Z-artig gebogen und bildet dieserart einen Haken 54 als technisches Äquivalent zu einer Rastnase. Ein freies Ende des weiteren Teilstückes 53 ist gefaltet und dabei auch derart verformt, daß sich eine Rastnase 55 in Verbindung mit dem Teilstück 53 befindet. Dem Haken 54 ist in einem von dem Stützschenkel 6b ausgehenden Flansch 56 eine Öffnung 57 zugeordnet. Diese Öffnung 57 bildet ein technisches Äquivalent zu den Rastöffnungen 28 des ersten Ausführungsbeispieles gemäß der Figur 2. Der Rastnase 55 zugeordnet ist eine Rastöffnung 58, die sich in einem wiederum von dem Stützschenkel 6b ausgehenden Flansch 59 befindet. Die Figur 12 zeigt einen Horizontalschnitt durch den Stützschenkel 6b in Höhe des aus dem ersten Ausführungsbeispiel übernommenen gummielastischen Elements 13. Unterhalb der angesprochenen Schnittebene befindet sich hier die in der Figur 11 angegebene untere Teillagerschale 7a mit dem zugeordneten Bodenflansch 23a. In der Figur 11 hat die obere Teillagerschale 8a bei eingehaktem Ende 54 einen vertikalen Abstand von dem gummielastischen Element 13, wobei sich die Rastnase 55 fern von der Rastöffnung 58 befindet. Im Unterschied dazu ist in der Figur 13 die obere Teillagerschale 8a in niedergeschwenktem und niedergedrücktem Zustand dargestellt, wobei die Rastnase 55 durch die Rastöffnung 58 hindurchgelangt ist und sich an dem Flansch 59 abstützt. Dies ist der Endzustand der Montage. Bei diesem Ausführungsbeispiel ist besonders leicht erkennbar, ob die Montage korrekt und erfolgreich durchgeführt ist. Die Figur 14 zeigt dabei das Montageergebnis in der Draufsicht.

Erkennbar ist also, daß obere Teillagerschalen 8 oder 8a im wesentlichen zu den gummiartigen Elementen 13 ausrichtbar und gegen diese bewegbar sind. Dabei spielt es an sich keine Rolle, aus welchem Werkstoff obere Teillagerschalen 8a hergestellt werden. Es ist auch erkennbar, daß es mehr als eine Ausführungsart gibt für das Fixieren von oberen Teillagerschalen 8 bzw. 8a an Stützschenkeln 6, 6a oder 6b.

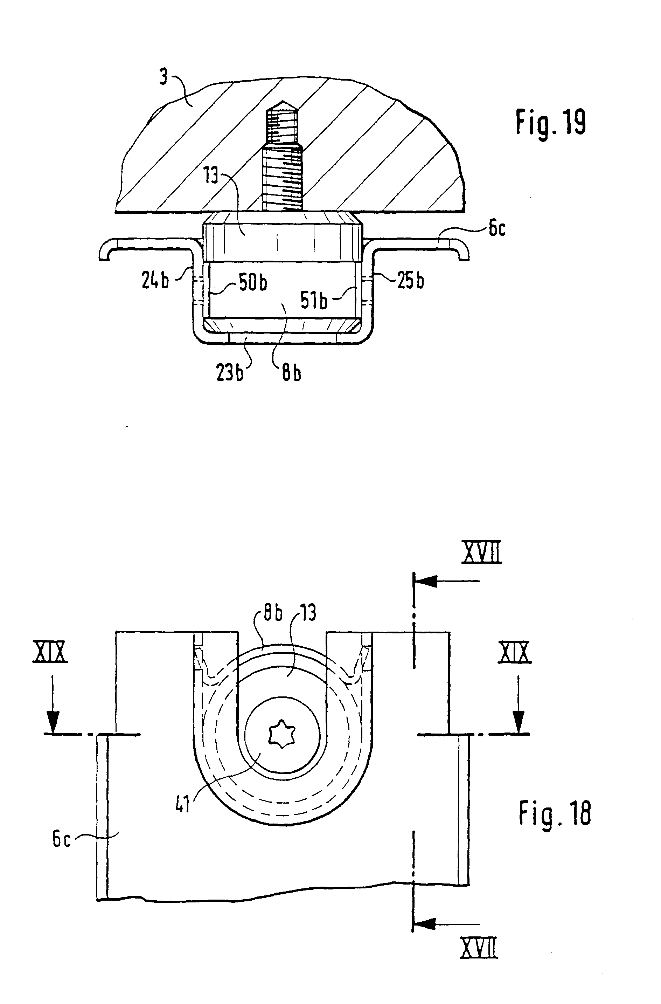

Ein viertes Ausführungsbeispiel für die elastische Lagerung ist in den Figuren 15 bis 18 in verschiedenen Montagezuständen dargestellt. Die Figur 15 zeigt dabei wieder gegen eine Stirnseite eines gummielastischen Elementes 13 gesehen einen Stützschenkel 6c mit einer unteren Teillagerschale 7, von der wiederum Verlängerungen 24b und 25b ausgehen. Da im Unterschied zu den vorangegangenen Ausführungsbeispielen diese Verlängerungen 24b und 25b je mit einer Rastöffnung 28a ausgestattet sind, ist der diesen Verlängerungen 24b und 25b sowie der unteren Teillagerschale 7 zugeordnete Bodenflansch mit 23b bezeichnet. Eine obere Teillagerschale 8b besteht wiederum aus einem metallischen Federwerkstoff, der beispielsweise in Bandform als Ausgangsmaterial dient. Vergleichbar dem dritten Ausführungsbeispiel schließen sich an die obere Teillagerschale 8b, die entsprechend dem Radius des gummielastischen Elementes 13 gekrümmt ist, Biegungen und von diesen ausgehende und nach oben gerichtete Teilstücke 50b und 51b an. Diese Teilstücke 50b und 51b finden beim Absenken der oberen Teillagerschale 8b zwischen den Verlängerungen 24b und 25b Platz. In nicht dargestellter Weise sind die Teilstücke 50b und 51b mit U-förmigen Schnitten versehen, so daß aus den Bezugsebenen dieser Teilstücke 50b und 51b Rastnasen 55b herausbiegbar sind und dabei größere Entfernungen aufweisen als ein lichter Abstand zwischen den Verlängerungen 24b und 25b. Dies ist in der Figur 15 besonders deutlich ersichtlich, denn dort ist die erfindungswesentliche obere Teillagerschale 8b in einem Abstand von dem Stützschenkel 6b dargestellt. In der Figur 15 und in der Figur 16 ist das gummielastische Element 13 bereits eingelagert in die untere Teillagerschale 7. Es ist demnach nur noch notwendig, die obere Teillagerschale 8b gegen das gummielastische Element 13 abzusenken und dieses dabei etwas zusammenzudrücken, so daß die Rastnasen 55b in die Rastöffnungen 28a einschnappen, was in der Figur 18 gestrichelt im Endzustand dargestellt ist. Die Figur 19 zeigt dabei die fertig montierte und fixierte obere Teillagerschale 8b in der Draufsicht.

Ein fünftes Ausführungsbeispiel für die elastische Lagerung ist in den Figuren 20 bis 22 in zwei verschiedenen Montagezuständen dargestellt. Dabei sind das hydraulische Aggregat 3, das gummielastische Element 13 und der Zapfen 14 aus den beschriebenen Ausführungsbeispielen übernommen. Die obere Teillagerschale 8 ist wiederum eingerichtet zum schrägen Aufsetzen auf das gummielastische Element 13 und nachfolgend zum Schwenken derart, daß der im wesentlichen U-förmige Bügel 32b wiederum um und unter die untere Teillagerschale 7 greift und dieserart ein Hochsteigen des hydraulischen Aggregates 3 relativ von der unteren Teillagerschale 7 vermeidet.

Anders als bei dem zweiten Ausführungsbeispiel gemäß den Figuren 8 bis 10 ist die Lagesicherung des Bügels 32b relativ zur unteren Teillagerschale 7 ausgeführt. Hier ist eine federnde Rastnase 38b an den Bügel 32b an dessen tiefstem Bereich angeformt, wobei der Übergang aus dem Bügel 32b in die federnde Rastnase 38b auf der zum hydraulischen Aggregat 3 gekehrten Seite des Bügels 32b liegt und somit die Rastnase 38b nach Art einer vom hydraulischen Aggregat 3 wegzeigenden Federzunge gestaltet ist und ein nicht bezeichnetes freies federndes Ende der Federzunge als die Rastnase 38b dient.

Der Rastnase 38b zugeordnet ist ein ortsfester Rastanschlag 60, über den hinweg beim Schwenken des Bügels 32b in die Montageendstellung die Federzunge unter elastischer Verbiegung gleitet. Wenn dabei die Rastnase 38b den Rastanschlag 60 passiert, federt die Rastnase 38b in die in der Figur 21 dargestellte Raststellung.

Der Rastanschlag 60 ist wie die federnde Zunge 43 und die Rastnase 44, die in den Figuren 8 bis 10 dargestellt sind, aus dem Werkstoff beziehungsweise einem Blech, aus dem der Stützschenkel 6d geformt ist, herstellbar durch Abgrenzen eines streifenartigen Bereichs des Bleches vom Stützschenkel 6d und durch Verbiegen dieses streifenartigen Bereichs, so daß durch einen im wesentlichen S-förmigen Verlauf des streifenartigen Bereichs die in der Figur 20 dargestellte Form entsteht. Vorteilhaft ist hier, daß an sich weiches Tiefziehblech verwendbar ist und die Elastizität eines thermoplastischen Werkstoffs des Bügels 32b zur federnden Anordnung der Rastnase 38b genutzt wird, wobei sowohl der Bügel 32b als auch die Rastnase 38b in einem Spritzwerkzeug gleichzeitig herstellbar sind.

Zusammenfassend kann festgehalten werden, daß zum Zwecke der im wesentlichen radialen Montage von oberen Teillagerschalen es unterschiedliche Arten der Lagesicherung dieser Teillagerschalen gibt und daß es dem Fachmann freisteht, zwischen unterschiedlichen Sicherungselementen bzw. Fixiermitteln auszuwählen.

## Patentansprüche

1. Elastische Lagerung (2) eines hydraulischen Aggregates (3) einer Fahrzeugbremsanlage in einem Fahrzeug, wobei die elastische Lagerung (2) gummielastische Elemente (13) aufweist, von denen wenigstens zwei nach Art von hohlzylindrischen Bauteilen ausgebildet und mit im wesentlichen waagerechten Längsachsen auf zwei einander gegenüberliegenden Seiten des hydraulischen Aggregates (3) verteilt angeordnet sind und in unteren Teillagerschalen (7; 7a) einliegen und von oberen lagefixierten Teillagerschalen (8; 8a; 8b) überdeckt sind, wobei die unteren Teillagerschalen (8; 8a; 8b) an zwei Stützschenkeln (6; 6a; 6b; 6c; 6d) einer mit dem Fahrzeug verbundenen Konsole (4) angeformt sind und wobei von dem hydraulischen Aggregat (3) ausgehende Lagerzapfen (14) sich in die gummielastischen Elemente (13) erstrecken, dadurch gekennzeichnet, daß die oberen Teillagerschalen (8, 8a, 8b) als auf die wenigstens zwei gummielastischen Elemente (13) im wesentlichen radial aufsetzbare Bauteile ausgebildet sind.

2. Elastische Lagerung eines hydraulischen Aggregates nach Anspruch 1, dadurch gekennzeichnet, daß von den unteren Teillagerschalen (7; 7a) im wesentlichen nach oben gerichtete Verlängerungen (24, 25, 24a, 25a, 24b, 25b) ausgehen und die oberen Teillagerschalen (8, 8a, 8b) zwischen diese Verlängerungen eintauchbar sind.

3. Elastische Lagerung eines hydraulischen Aggregates nach Anspruch 1 oder 2, dadurch gekennzeichnet, daß an die oberen Teillagerschalen (8a, 8b) im wesentlichen nasenartige Fixiermittel wie Rastnasen (54, 55, 55b) angeformt sind, die Rastöffnungen (28a, 57, 58) hintergreifen, wobei diese Rastöffnungen den Stützschenkeln (6b, 6c) zugeordnet sind.

4. Elastische Lagerung eines hydraulischen Aggregates nach Anspruch 3, dadurch gekennzeichnet, daß die oberen Teillagerschalen (8a, 8b) und deren Fixiermittel wie Rastnasen (55, 55b) aus einem im wesentlichen bandartigen metallischen Federwerkstoff bestehen.

5. Elastische Lagerung eines hydraulischen Aggregates nach Anspruch 4, dadurch gekennzeichnet, daß die oberen Teillagerschalen (8a, 8b) als um die elastischen Elemente (13) gekrümmte Bauteile ausgebildet sind, von denen nach oben abstrebende und zwischen die Verlängerungen (24a, 25a, 24b, 25b) eintauchbare Teilstücke (50, 51, 50b, 51b) anschließen, wobei die Rastnasen (55, 55b) wenigstens mittelbar diesen Teilstücken zugeordnet sind und wobei diesen Rastnasen zugeordnete Rastöffnungen (28a, 58) wenigstens mittelbar starr den Stützschenkeln (6b, 6c) zugeordnet sind.

6. Elastische Lagerung eines hydraulischen Aggregates nach Anspruch 5, dadurch gekennzeichnet, daß die Rastnasen (55, 55b) hergestellt sind durch Anordnung von U-förmigen Schnitten und Herausbiegen aus an die oberen Teilschalen (8a, 8b) sich anschließenden Teilstücken (51, 53, 50b, 51b).

7. Elastische Lagerung eines hydraulischen Aggregates nach Anspruch 6, dadurch gekennzeichnet, daß ein Ende (54) eines Teilstückes (52) hakenartig gebogen ist zum Einhaken in eine Öffnung (57), die sich in einem an dem Stützschenkel (6b) befindlichen Flansch (56) befindet.

8. Elastische Lagerung eines hydraulischen Aggregates nach Anspruch 1 oder 2, dadurch gekennzeichnet, daß die oberen Teillagerschalen (8) in Richtungen, die sich parallel zu Achsen (18) für die gummielastischen Elemente (13) erstrecken, kürzer sind als die äußeren Durchmesser der gummielastischen Elemente (13) und daß von den oberen Teillagerschalen (8) und einstückig mit diesen ausgebildet Bügel (32, 32a, 32b) ausgehen, die im montierten Zustand um die unteren Teillagerschalen (7) greifen und zur Montage unter die unteren Teillagerschalen (7) schwenkbar sind.

9. Elastische Lagerung eines hydraulischen Aggregates nach Anspruch 8, dadurch gekennzeichnet, daß die Stützschenkel (6) rechtwinkelig und dabei parallel zu den Längsachsen der unteren Teillagerschalen (7) verlaufende Flansche (26, 27) haben, die zwischen sich die Bügel (32) und dabei von den Bügeln (32) ausgehende federnde Zungen (36, 37), die gegen die Flansche (26, 27) gerichtete Rastnasen (38, 39) tragen, aufnehmen und zum Verrasten der Rastnasen (38, 39) Rastöffnungen (28) aufweisen.

10. Elastische Lagerung eines hydraulischen Aggregates nach Anspruch 8, dadurch gekennzeichnet, daß der Bügel (32a) an einer nach der Montage tiefsten Stelle eine Rastkerbe (42) aufweist, daß ein zugeordneter Stützschenkel (6a) eine federnde Zunge (43) mit einer in die Rastkerbe (42) eintauchbaren Rastnase (44) aufweist.

11. Elastische Lagerung eines hydraulischen Aggregates nach Anspruch 10, dadurch gekennzeichnet, daß die federnde Zunge (43) aus dem Werkstoff des Stützschenkels (6a) herausgebogen ist.

12. Elastische Lagerung eines hydraulischen Aggregates nach Anspruch 8, dadurch gekennzeichnet, daß der Bügel (32a) eine nach Art einer federnden Zunge gestaltete und dabei gegen die Schwenkmontagerichtung gerichtete Rastnase (38b) aufweist, der ein am Stützschenkel (6d) angeordneter Rastanschlag (60) zugeordnet ist, wobei die federnde Rastnase (38b) derart eingerichtet ist, daß sie vor dem Erreichen der Schwenkmontageendstellung des Bügels (32a) vom Rastanschlag (60) elastisch gebogen und beim Erreichen der Schwenkmontageendstellung zurückfedert und eine Raststellung einnimmt.

13. Elastische Lagerung eines hydraulischen Aggregates nach einem der Ansprüche 1 bis 11, dadurch gekennzeichnet, daß die Zapfen (14) mit Köpfen (41) nach Art von Senkkopfschrauben ausgebildet sind und die gummielastischen Elemente (13) den Köpfen (41) angepaßt sind.

## Claims

1. Elastic mounting (2) of a hydraulic unit (3) of a vehicle braking system in a vehicle, the elastic mounting (2) having rubbery-elastic elements (13) of which at least two are designed in the manner of hollow-cylindrical components and are distributed, with essentially horizontally longitudinal axes, on two mutually opposite sides of the hydraulic unit (3) and are enclosed in lower partial bearing shells (7; 7a) and are covered by upper, positionally fixed partial bearing shells (8; 8a; 8b), the lower partial bearing shells (8; 8a; 8b) being integrally formed on two supporting legs (6; 6a; 6b; 6c; 6d) of a bracket (4) which is connected to the vehicle, and bearing journals (14) which emerge from the hydraulic unit (3) extending into the rubbery-elastic elements (13), characterized in that the upper partial bearing shells (8, 8a, 8b) are designed as components which can be placed essentially radially onto the at least two rubbery-elastic elements (13).

2. Elastic mounting of a hydraulic unit according to Claim 1, characterized in that extensions (24, 25, 24a, 25a, 24b, 25b), which are essentially directed upwards, emerge from the lower partial bearing shells (7; 7a) and the upper partial bearing shells (8, 8a, 8b) can be inserted between these extensions.

3. Elastic mounting of a hydraulic unit according to Claim 1 or 2, characterized in that there are integrally formed on the upper partial bearing shells (8a, 8b) essentially lug-like fixing means, such as latching lugs (54, 55, 55b), which grip the latching openings (28a, 57, 58) from behind, these latching openings being assigned to the supporting legs (6b, 6c).

4. Elastic mounting of a hydraulic unit according to Claim 3, characterized in that the upper partial bearing shells (8a, 8b) and their fixing means, such as latching lugs (55, 55b), consist of an essentially strip-like, metallic spring material.

5. Elastic mounting of a hydraulic unit according to Claim 4, characterized in that the upper partial bearing shells (8a, 8b) are designed as components which are curved around the elastic elements (13) and are adjoined by upwardly projecting subpieces (50, 51, 50b, 51b) which can be inserted between the extensions (24a, 25a, 24b, 25b), the latching lugs (55, 55b) being assigned at least indirectly to these subpieces, and latching openings (28a, 58), which are assigned to these latching lugs, being assigned at least indirectly and rigidly to the supporting legs (6b, 6c).

6. Elastic mounting of a hydraulic unit according to Claim 5, characterized in that the latching lugs (55, 55b) are produced by the arrangement of U-shaped cuts and the bending out of subpieces (51, 53, 50b, 51b) adjoining the upper partial shells (8a, 8b).

7. Elastic mounting of a hydraulic unit according to Claim 6, characterized in that one end (54) of a subpiece (52) is bent in a hook-like manner for hooking into an opening (57) which is situated in a flange (56) situated on the supporting leg (6b).

8. Elastic mounting of a hydraulic unit according to Claim 1 or 2, characterized in that the upper partial bearing shells (8), in directions which extend parallel to axes (18) for the rubbery-elastic elements (13), are shorter than the outer diameters of the rubbery-elastic elements (13), and in that there emerge from the upper partial bearing shells (8) and integral with the latter brackets (32, 32a, 32b) which, when fitted, grip around the lower partial bearing shells (7) and can be pivoted for installation below the lower partial bearing shells (7).

9. Elastic mounting of a hydraulic unit according to Claim 8, characterized in that the supporting legs (6) have flanges (26, 27) which run at right angles and at the same time parallel to the longitudinal axes of the lower partial bearing shells (7), accommodate between them the brackets (32) and at the same time resilient tongues (36, 37), which emerge from the brackets (32) and bear latching lugs (38, 39) directed counter to the flanges (26, 27), and have latching openings (28) for the latching of the latching lugs (38, 39).

10. Elastic mounting of a hydraulic unit according to Claim 8, characterized in that the bracket (32a) has a latching notch (42) at a lowest point after the installation, and in that an associated supporting leg (6a) has a resilient tongue (43) having a latching lug (44) which can be inserted into the latching notch (42).

11. Elastic mounting of a hydraulic unit according to Claim 10, characterized in that the resilient tongue (43) is bent out from the material of the supporting leg (6a).

12. Elastic mounting of a hydraulic unit according to Claim 8, characterized in that the bracket (32a) has a latching lug (38b) which is designed in the manner of a resilient tongue and at the same time is directed counter to the pivoting installation direction and which is assigned a latching stop (60) arranged on the supporting leg (6d), the resilient latching lug (38b) being arranged in such a manner that it is bent elastically by the latching stop (60) before the pivoting-installation final position of the bracket (32a) is reached, and when the pivoting-installation final position is reached springs back and takes up a latching position.

13. Elastic mounting of a hydraulic unit according to one of Claims 1 to 11, characterized in that the journals (14) are designed with heads (41) in the manner of countersunk head screws and the rubbery-elastic elements (13) are matched to the heads (41).

## Revendications

1. Suspension élastique (2) d'un organe hydraulique (3) d'un système de freinage de véhicule automobile selon lequel :
• la suspension élastique (2) comporte des éléments (13) élastiques de type caoutchouc, dont au moins deux ont la forme de pièces cylindriques creuses qui sont montées avec leur axe longitudinal essentiellement horizontal sur deux côtés opposés de l'organe hydraulique (3), de façon répartie, et se placent dans des coquilles inférieures (7, 7a) en étant recouvertes par des coquilles supérieures (8, 8a, 8b) bloquées en position,
• les coquilles inférieures étant formées sur deux branches de support (6, 6a, 6b, 6c, 6d) reliées par une console (4) au véhicule et,
• les tourillons de palier (14) partant de l'organe hydraulique (3) viennent dans les éléments élastiques (13),
caractérisée en ce que
les coquilles supérieures (8, 8a, 8b) sont réalisées par des pièces qui se placent essentiellement radialement sur au moins deux éléments élastiques (13).

2. Suspension élastique d'un organe hydraulique selon la revendication 1,
caractérisée en ce que
les prolongements (24, 25, 24a, 25a, 24b, 25b) partent des coquilles inférieures (7, 7a) en étant dirigés essentiellement vers le haut et, les coquilles supérieures (8, 8a, 8b) pénètrent entre ces prolongements.

3. Suspension élastique d'un organe hydraulique selon l'une des revendications 1 ou 2,
caractérisée en ce que
des moyens de blocage essentiellement en forme de becs sont prévus tels que des becs d'accrochage (54, 55, 55b) sur les coquilles supérieures (8a, 8b), pour venir dans des orifices d'accrochage (28a, 57, 58), ces orifices d'accrochage étant associés aux branches de support (6b, 6c).

4. Suspension élastique d'un organe hydraulique selon la revendication 3,
caractérisée en ce que
les coquilles supérieures (8a, 8b) et leurs moyens de fixation tels que les becs d'accrochage (55, 55b) sont en une matière élastique métallique essentiellement en forme de ruban.

5. Suspension élastique d'un organe hydraulique selon la revendication 4,
caractérisée en ce que
les coquilles supérieures (8a, 8b) sont des pièces cintrées autour des éléments élastiques (13), et comportent des segments, en saillie vers le haut (50, 51, 50b, 51b) pénétrant entre les prolongements (24a, 25a, 24b, 25b), les becs d'accrochage (55, 55b) étant associés au moins indirectement à ces segments, et les orifices d'accrochage (28a, 58) associés à ces becs d'accrochage étant associés au moins indirectement de manière rigide aux branches de support (6b, 6c).

6. Suspension élastique d'un organe hydraulique selon la revendication 5,
caractérisée en ce que
les becs d'accrochage (55, 55b) sont réalisés par des découpes en forme de U et par dégagement de segments (51, 53, 50b, 51b) prolongeant les coquilles supérieures (8a, 8b).

7. Suspension élastique d'un organe hydraulique selon la revendication 6,
caractérisée en ce qu'
une extrémité (54) d'un segment (52) est recourbée en forme de crochet pour s'accrocher dans une ouverture (57) prévue dans une bride (56) de l'une des branches de support (6b).

8. Suspension élastique d'un organe hydraulique selon l'une des revendications 1 ou 2,
caractérisée en ce que
les coquilles supérieures (8) s'étendent dans des directions parallèles à l'axe (18) des éléments élastiques (13) et sont plus courts que les diamètres extérieurs des éléments élastiques (13) et les coquilles supérieures (8) font corps avec des étriers (32, 32a, 32b) qui partent de celles-ci et qui à l'état monté entourent les coquilles inférieures (7) et peuvent basculer sous les coquilles inférieures (7) pour le montage.

9. Suspension élastique d'un organe hydraulique selon la revendication 8,
caractérisée en ce que
les branches de support (6) ont des brides (26, 27) perpendiculaires aux coquilles inférieures (7) et ainsi parallèles à leur axe longitudinal, ces brides recevant entre elles les étriers (32), dont des languettes (36, 37) élastiques partant des étriers (32) ont des becs d'accrochage (38, 39) dirigés vers les brides (26, 27), et comportant des orifices d'accrochage (28) pour recevoir les becs d'accrochage (38, 39).

10. Suspension élastique d'un organe hydraulique selon la revendication 8,
caractérisée en ce que
l'étrier (32a) comporte à son point le plus bas après le montage, une encoche d'accrochage (42), et la branche de support (6a) correspondante comporte une languette élastique (43) avec un bec d'accrochage (44) destiné à venir dans l'encoche d'accrochage (42).

11. Suspension élastique d'un organe hydraulique selon la revendication 10,
caractérisée en ce que
la languette élastique (43) est repliée à partir de la matière formant la branche de support (6a).

12. Suspension élastique d'un organe hydraulique selon la revendication 8,
caractérisée en ce que
l'étrier (32a) présente un bec d'accrochage (38b) en forme de languette élastique dirigée contre la direction de montage basculant, et une butée d'accrochage (60) correspondante est prévue sur la branche de support (6d), le bec d'accrochage (38b), élastique étant réalisé pour se déformer élastiquement avant d'atteindre la position finale de montage par basculement de l'étrier (32a) par rapport à la butée d'accrochage (60) et pour revenir élastiquement à la fin du montage par basculement et prendre une position d'accrochage.

13. Suspension élastique d'un organe hydraulique selon l'une des revendications 1 à 11,
caractérisée en ce que
les tourillons (14) ont des têtes (41) en forme de vis à tête fraisée et les éléments élastiques (13) sont adaptés aux têtes (41).
